# EUROPEAN PATENT SPECIFICATION

(11) **EP 3 934 899 B1**
(45) Date of publication and mention of the grant of the patent: **29.05.2024**
(21) Application number: 20822770.2
(22) Date of filing: 10.06.2020
(51) Int. Cl.: B29C 70/54, B29C 33/26, B29D 99/00, B29L 31/08

(54) **DETACHABLE TURNER BEAM FOR TURNING WIND TURBINE BLADE MOULD**
ABNEHMBARER WENDEBALKEN ZUM DREHEN EINER WINDTURBINENSCHAUFEL
POUTRE AMOVIBLE DE RETOURNEMENT PERMETTANT DE RETOURNER UN MOULE DE PALE D'ÉOLIENNE

(30) Priority: 10.06.2019 CN 201920861929 U; 19.07.2019 CN 201921137853 U; 24.07.2019 WO PCT/CN2019/097432; 27.04.2020 CN 202020660909 U
(43) Date of publication of application: 12.01.2022
(73) Proprietor: Gurit Tooling (Taicang) Co., Ltd., Suzhou, Jiangsu 215400 (CN)
(72) Inventor: ROBITAILLE, Marc, Montreal, Québec (CA); HUSTON, Ken, Montreal, Québec (CA); BRODEUR, Michael, Montreal, Québec (CA)
(74) Representative: Page White Farrer
(86) International application number: PCT/CN2020/095401
(87) International publication number: WO 2020/249014

(56) References cited:
- CN-A- 108 145 993
- CN-U- 205 951 329
- CN-U- 207 772 205

## Description

### TECHNICAL FIELD

The present invention relates to the field of wind turbine blade moulds, in particular to a detachable turner beam apparatus for turning a wind turbine blade mould.

### BACKGROUND

As a kind of clean and renewable energy, wind energy has been paid more and more attention by countries all over the world. The global wind energy is about 2.74 x 10⁹MW, of which the available wind energy is 2 x 10⁷MW, which is 10 times larger than the total exploitable water energy on the earth. Wind has long been used by people, mainly by pumping water by windmill, grinding flour, etc. Now, people are interested in how to use wind to generate electricity. The principle of wind power generation is to use wind to drive the wind turbine blades to rotate, and then speed up the rotating speed through a speed-up machine to generate electricity. According to current wind power generation technology, a wind speed of about three meters per second can start generating electricity. Wind power generation is forming a boom in the world because it has no fuel problems and does not produce radiation or air pollution.

With the development of clean energy, the wind power industry has also developed rapidly. The megawatt level of wind turbine blades is increasing, the length of wind turbine blades has grown from the original more than 40 meters to the present more than 80 meters. As the length of wind turbine blades is getting longer and longer, so as the length of mould, and the webs of wind turbine blades are getting bigger and longer. At the same time, the size specification of wind turbine blades are getting bigger and bigger because of more and more mainstream wind power demands.

The turner beam is a key structure in the mainstream wind turbine blade mould. There are about twelve turner beams in the mainstream wind turbine blade mould, including six upper beams in the upper mould and six lower beams in the lower mould. There are many drawbacks due to the presence of so many turner beams in the wind turbine blade mould. As the wind power generation gradually increases, the size of wind turbine blade moulds is increasing, the size and the number of turner beams will increase. Thus these drawbacks will become more and more prominent, and the analysis is as follows.

### First, connection mode

At present, the basic connection mode of the turner beam in the mainstream wind turbine blade mould is direct welding. The turner beam needs to ensure the opening and closing of the upper and lower moulds, and thus the position precision of the turner beam in the upper mould and lower mould needs to be within 1-2 mm. However, as the length of the wind turbine blade mould exceeds 60 meters, and the width and height exceeds 5-6 m, it is very difficult to ensure the opening and closing by welding. In the later stage, the inaccuracy will lead to abnormal noise of the turner arm, jitter of the mould during mould turning, misalignment during mould closing, etc.

### Second, strength

The turner beam is the main stressed member. The material of the turner beam is generally steel with high yield strength, and the part of the mould steel frame connected to the turner beam is mostly Q345D steel, and many manufacturers use Q235B steel. After the mould is opened and closed for several times, these welded parts will become cracked, which is very dangerous.

### Third, cost

The price of each set of wind turbine blade mould is very expensive, and the cost of manufacturing, installation and welding of turner beams accounts for a large proportion of the cost. Due to the rapid development of wind power industry, the life cycle of a set of wind power mould is 1-2 years on average, and a minority of moulds can be used for 3-4 years. If the turner beam can be reused, the manufacturing cost of wind power mould can be greatly reduced.

### Fourth, installation state

At present, the mainstream wind turbine blade mould needs to be in the closing state when installing the turner beam because the upper and lower turner beams shall be in the same plane and be parallel to each other, and the closing of the wind power mould is very difficult and inaccurate before the turner beam is installed.

CN205951329U discloses a detachable turner beam apparatus, for turning a wind turbine blade mould, having the features of the pre-characterising portion of claim 1.

### SUMMARY

Purpose of the present invention: in order to solve the drawbacks of the prior art, the present invention provides a detachable turner beam for turning a wind turbine blade mould which is simple in installation, high in strength and accuracy and low in cost.

Solution: in order to realize the above purpose, the present invention provides a detachable turner beam apparatus for turning a wind turbine blade mould according to claim 1. Further preferred or optional features are defined in the dependent claims.

In particular, the detachable turner beam apparatus for turning a wind turbine blade mould described in the present invention comprises an upper beam, a lower beam, and a turner arm connecting the upper beam and the lower beam.

The upper beam comprises an upper beam element having a first free end and an opposite second end. The second end is connected to the turner arm by a first turner arm connection mechanism mounted on the upper beam element. The upper beam further comprises first and second plate mounting mechanisms which are mutually spaced along the length of the upper beam element and are respectively mounted towards the first and second ends of the upper beam element. Each of the plate mounting mechanisms respectively comprises a fitting plate which is configured to be detachably fitted to a respective longitudinal side of an upper mould part of a wind turbine blade mould. The first and second plate mounting mechanisms are adjustable whereby the respective fitting plate is movable in at least two orthogonal directions relative to the upper beam element to a desired position and the respective fitting plate can be fixed in the desired position.

The lower beam comprises a lower beam element having a first free end and an opposite second end. The second end is connected to the turner arm by a second turner arm connection mechanism mounted on the lower beam element. A bottom support is installed beneath the lower beam element.

As a further preferred embodiment of the present invention, the first plate mounting mechanism is, mounted towards the free end of the upper beam, and thereby in use is mounted to a front longitudinal side of the wind turbine blade mould, whereas the second plate mounting mechanism is mounted towards the opposite second end of the upper beam, and thereby in use is mounted to a rear longitudinal side of the wind turbine blade mould.

As a further preferred embodiment of the present invention, the upper beam is a welded box upper beam and the lower beam is a welded box lower beam.

As a further preferred embodiment of the present invention, each of the first and second plate mounting mechanisms comprises a transverse transition adjusting plate adjustably fitted to the upper beam, wherein the transverse transition adjusting plate is movable longitudinally along the upper beam, and further comprises a first fixing mechanism for fixing the transverse transition adjusting plate at a desired longitudinal position along the upper beam.

As a further preferred embodiment of the present invention, each of the first and second plate mounting mechanisms further comprises a transverse transition fixing plate which is fixed to the upper beam at a fixed position, and each transverse transition adjusting plate is adjustably fixed to the respective transverse transition fixing plate by the respective first fixing mechanism.

As a further preferred embodiment of the present invention, the first fixing mechanism comprises a plurality of bolts.

As a further preferred embodiment of the present invention, the bolts pass through transversely elongated adjusting holes in the transverse transition adjusting plate and fixing bolt holes in the transverse transition fixing plate, so that the transverse transition adjusting plate can move transversely with respect to the transverse transition fixing plate and/or the bolts pass through longitudinally elongated adjusting holes in the transverse transition adjusting plate and fixing bolt holes in the transverse transition fixing plate, so that the transverse transition adjusting plate can move longitudinally with respect to the transverse transition fixing plate.

When the transverse transition adjusting plates of the first and second plate mounting mechanisms are fixed on the transverse transition fixing plate by bolts, then in the event that the installation of the upper beam deviates from a desired position, the bolts are screwed out and in with respect to the transverse transition fixing plate, thereby permitting the adjustment of the position of the first and second transverse transition adjusting plates with respect to the respective transverse transition fixing plates, thereby compensating the front and rear positions of the whole upper beam to be moved by the movement of the front and rear positions of the adjusting plates.

As a further preferred embodiment of the present invention, each of the first and second plate mounting mechanisms comprises a first adjusting mechanism fitted between the transverse transition adjusting plate and the transverse transition fixing plate or part of the upper beam adjacent thereto, the first adjusting mechanism being arranged for adjusting the position of the transverse transition adjusting plate relative to the transverse transition fixing plate in a direction extending longitudinally along the upper beam.

As a further preferred embodiment of the present invention, the first adjusting mechanism comprises a first adjusting bolt threadably fitted to a first threaded coupling which is in a fixed position relative to the upper beam, and the first adjusting bolt movably contacts the transverse transition adjusting plate.

According to a preferred embodiment of the present invention, by manually pushing the transverse transition adjusting plate after unscrewing the bolts, for example by rotating the first adjusting bolt, the transverse transition adjusting plate can be moved longitudinally with respect to the transverse transition fixing plate. The movement range is for example ± 50 mm, or ± 25 mm. This can provide a chord-wise adjustment of the fixing plates of the first and second plate mounting mechanisms. Alternatively or additionally, by manually pushing the transverse transition adjusting plate after unscrewing the bolts, the transverse transition adjusting plate can be moved transversely with respect to the transverse transition fixing plate. The movement range in each direction is for example ± 50 mm, or ± 25 mm. This can provide a span-wise adjustment of the fixing plates of the first and second plate mounting mechanisms.

As a further preferred embodiment of the present invention, each transverse transition adjusting plate comprises a pair of trunnions, the trunnions extending in opposite directions transversely away from the upper beam, and each of the first and second plate mounting mechanisms further comprises a pair of longitudinal transition adjusting plates, each longitudinal transition adjusting plate being rotatably mounted on a respective trunnion, wherein each longitudinal transition adjusting plate comprises a cavity in which the respective trunnion is received, wherein each longitudinal transition adjusting plate has a respective fitting plate fitted thereto.

As a further preferred embodiment of the present invention, the detachable turner beam apparatus further comprises a second adjusting mechanism fitted to each respective longitudinal transition adjusting plate, the second adjusting mechanism being positioned between the longitudinal transition adjusting plate and the upper beam, the second adjusting mechanism being arranged for transversely adjusting the longitudinal transition adjusting plate in a direction orthogonal to the upper beam.

As a further preferred embodiment of the present invention, the second adjusting mechanism comprises a second adjusting bolt threadably fitted to a second threaded coupling which is in a fixed position relative to the upper beam or relative to the transverse transition adjusting plate, and the second adjusting bolt movably contacts the longitudinal transition adjusting plate.

As a further preferred embodiment of the present invention, the detachable turner beam apparatus further comprises a second fixing mechanism fitted to each respective longitudinal transition adjusting plate, the second fixing mechanism being arranged for fixing the longitudinal transition adjusting plate to a desired transverse position orthogonal to the upper beam.

As a further preferred embodiment of the present invention, each longitudinal transition adjusting plate comprises a pair of plate members fitted around respective opposite sides of the respective trunnion, and the second fixing mechanism comprises a plurality of bolts extending through the pair of plate members for clamping the pair of plate members in a fixed position relative to the respective trunnion.

As a further preferred embodiment of the present invention, the fitting plate is sandwiched between the pair of plate members.

According to a preferred embodiment of the present invention, by manually pushing the longitudinal transition adjusting plate after loosening the trunnion in the cavity by releasing the second fixing mechanism, for example by rotating the second adjusting bolt, the longitudinal transition adjusting plate can be moved transversely with respect to the transverse transition fixing plate. The movement range is for example ± 50 mm, or ± 25 mm. This can provide a span-wise adjustment of the fixing plates of the first and second plate mounting mechanisms.

As a further preferred embodiment of the present invention, the detachable turner beam apparatus further comprises a third adjusting mechanism fitted to each respective longitudinal transition adjusting plate, the third adjusting mechanism being positioned between the fitting plate and the longitudinal transition adjusting plate, the third adjusting mechanism being arranged for vertically adjusting the fitting plate relative to the longitudinal transition adjusting plate.

As a further preferred embodiment of the present invention, the third adjusting mechanism comprises a third adjusting bolt threadably fitted to a third threaded coupling which is in a fixed position relative to the fitting plate, and the third adjusting bolt movably contacts the longitudinal transition adjusting plate.

As a further preferred embodiment of the present invention, the detachable turner beam apparatus further comprises a third fixing mechanism fitted to each respective longitudinal transition adjusting plate, the third fixing mechanism being arranged for fixing the fitting plate at a desired height relative to the respective longitudinal transition adjusting plate.

According to a preferred embodiment of the present invention, by manually pushing the fitting plate after loosening the third fixing mechanism, for example by rotating the third adjusting bolt, the fitting plate can be moved vertically with respect to the longitudinal transition adjusting plate. The movement range is for example ± 50 mm. This can provide a height-wise adjustment of the fixing plates of the first and second plate mounting mechanisms.

As a further preferred embodiment of the present invention, the first turner arm connection mechanism comprises a plurality of vertically oriented parallel plates extending in a direction parallel to the upper beam, the vertically oriented parallel plates being spaced from each other, wherein the vertically oriented parallel plates are removably connected to an upper end of the turner arm.

As a further preferred embodiment of the present invention, the vertically oriented parallel plates comprise vertically extended through-holes, a plurality of bolts pass through the through-holes for removably connecting the upper beam to the upper end of the turner arm, and the height of the upper beam can be adjusted by adjusting the positions of the through-holes relative to the bolts.

As a further preferred embodiment of the present invention, the second turner arm connection mechanism comprises an upright plate extending along a direction transverse to the lower beam and a base plate extending away from a lower portion of the upright plate in a direction parallel to the longitudinal direction of the lower beam, wherein the turner arm is mounted adjacent to the upright plate and on the base plate.

As a further preferred embodiment of the present invention, the bottom support comprises a pair of bottom bearing plates, each bottom bearing plate being installed beneath a respective one of the first free end and the opposite second end of the lower beam.

As a further preferred embodiment of the present invention, the lower beam further comprises a level adjusting device, wherein the level adjusting device is fitted between the first free end of the lower beam and the respective bottom bearing plate therebeneath, and the opposite second end is fitted to the respective bottom bearing plate therebeneath by a hinge mechanism having a horizontal hinge axis.

As a further preferred embodiment of the present invention, the level adjusting device comprises a link mechanism, the link mechanism having a first end hingedly fitted to the respective bottom bearing plate and a second end hingedly fitted to a support plate that is adjustably fitted to the first free end.

As a further preferred embodiment of the present invention, the bearing bottom plate is fixed to the ground by expansion bolts or chemical anchor bolts.

As a further preferred embodiment of the present invention, the turner arm is connected to a hydraulic oil cylinder and to an electronic control unit therefor. As a further preferred embodiment of the present invention, when turning is required, the hydraulic cylinder is controlled to work by the electronic control unit, and the piston rod of the hydraulic cylinder pushes one end of the turner arm and drives the upper beam to rotate with respect to the lower beam. The working principle is based on the principle of a crank-slider mechanism. The technology belongs to the prior art and will not repeated here.

As a further preferred embodiment of the present invention, each fitting plate comprises two orthogonal plate elements, defining therebetween an elongate upwardly extending inner corner surface for mounting to an elongate spar of a framework structure of an upper mould.

As a further preferred embodiment of the present invention, the detachable turner beam apparatus is in combination with an upper mould of a wind turbine blade mould, the upper mould having a framework structure for supporting an upper moulding surface, wherein the fixing plates are fixed to the framework structure of the upper mould by means of threaded screws.

As a further preferred embodiment of the present invention, the detachable turner beam apparatus is in combination with a lower mould of a wind turbine blade mould, the lower mould having a framework structure for supporting a lower moulding surface, wherein the lower beam passes through the framework structure of the lower mould and is not in contact with the lower mould.

Beneficial effects: the detachable turner beam apparatus for turning a wind turbine blade mould of the present invention has the following advantages compared with the prior art:
1. It avoids the deformation and displacement of the lower mould of the wind turbine blade mould caused by the stress produced by the turner beam in the turning process in the prior art. The lower beam of the detachable turner beam apparatus of the present invention passes through the steel structure of a lower mould, without contact with the steel structure. The lower beam can therefore be directly connected to the ground, to transfer all stresses to the ground. This provides the advantage that the stress produced by the turner beam in the turning process does not need to be considered in the design of the lower mould of the wind turbine blade mould, which greatly reduces the risk of deformation and displacement. Without considering the above problem, the height of the lower mould can be reduced to the minimum, so that the overall height of the wind turbine blade mould can be reduced, thereby reducing the requirements for height of facilities and vehicles.
2. The upper mould turner beam is connected to the upper mould steel structure through a transition connection structure, changing from the original multiple-point connection to the present multiple-face connection, which better disperses the stress at the connection, to make longitudinal movement adjustment of ±50mm, or ± 25 mm, through the longitudinal transition adjusting plate and make transverse movement through the transverse transition adjusting plate, so as to quickly meet the installation requirements of the turner beam and greatly reduce the installation time.
3. The upper and lower turner beams are adjusted twice, and the installation accuracy requirements are fully met when the turner arm is replaced at the later stage.
4. The wind turbine blade mould is separated from the turner arm in the manufacture and transportation process, and the turner arm is a hydraulic system, which cannot be operated until it is completely installed, thus it is very difficult to debug the opening and closing mould at this time. The detachable turner beam apparatus of the present invention has the hinge function itself, which can complete the debugging of the opening and closing mould easily with the help of crane.
5. The detachable turner beam apparatus of the wind turbine blade mould of the present invention is basically not limited by the shape of the blade, can be directly replaced and installed on all the existing mainstream blade moulds under the mould opening state, greatly reduces the manufacturing cost, has strong universality, and is more convenient and flexible in use.
6. The detachable turner beam apparatus provides plural fitting plates providing plural mounting faces for removable fitting to the framework of the upper mould. In a preferred embodiment each fitting plate comprises two orthogonal plate elements, defining therebetween an elongate upwardly extending inner corner surface for mounting to an elongate spar of a mould framework. The fitting plates are movable to a desired position in at least two orthogonal directions, preferably three orthogonal directions, relative to the upper beam element. This provides a highly versatile upper beam structure which can readily be securely fitted to a variety of different upper mould structures.

### DESCRIPTION OF DRAWINGS

Figure 1 is a schematic structural diagram of an upper beam, showing a perspective view from above and from the front, of an embodiment of the present invention;
Figure 2 is an exploded schematic perspective view from below and from the front of the upper beam of Figure 1;
Figure 3 is a schematic perspective side view from the rear of the upper beam of Figure 1;
Figure 4 is a schematic perspective view from above and from the front of a free end of the upper beam of Figure 1;
Figure 5 is a schematic structural diagram of a lower beam, showing a perspective view from above and from the front, of the embodiment of the present invention;
Figure 6 is a schematic perspective view from above and from the front of a free end of the lower beam of Figure 5;
Figure 7 is a schematic structural diagram of the detachable turner beam apparatus of the embodiment of the present invention, showing a perspective view from above and from the front, in which the upper beam of Figure 1 and the lower beam of Figure 5 are connected by a turner arm;
Figure 8 is a schematic structural diagram of a wind turbine blade mould in an open state, the mould being fitted to the detachable turner beam apparatus of Figure 7, showing a perspective view from above and from the front;
Figure 9 is a schematic structural diagram of the wind turbine mould, shown in Figure 8, in a closed state, showing a perspective view from above and from the rear;

### DETAILED DESCRIPTION OF EMBODIMENTS

The present invention is further explained below in connection with the drawings and the specific embodiments.

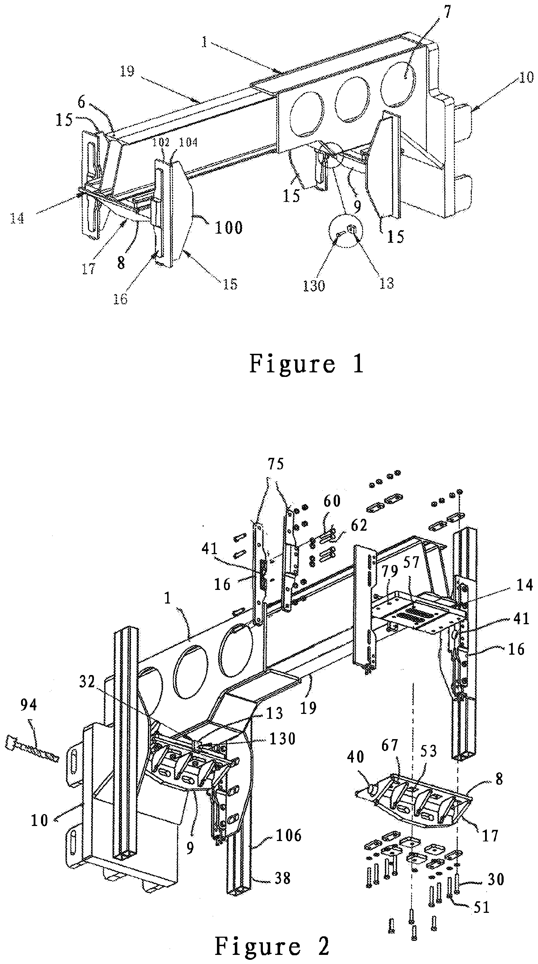

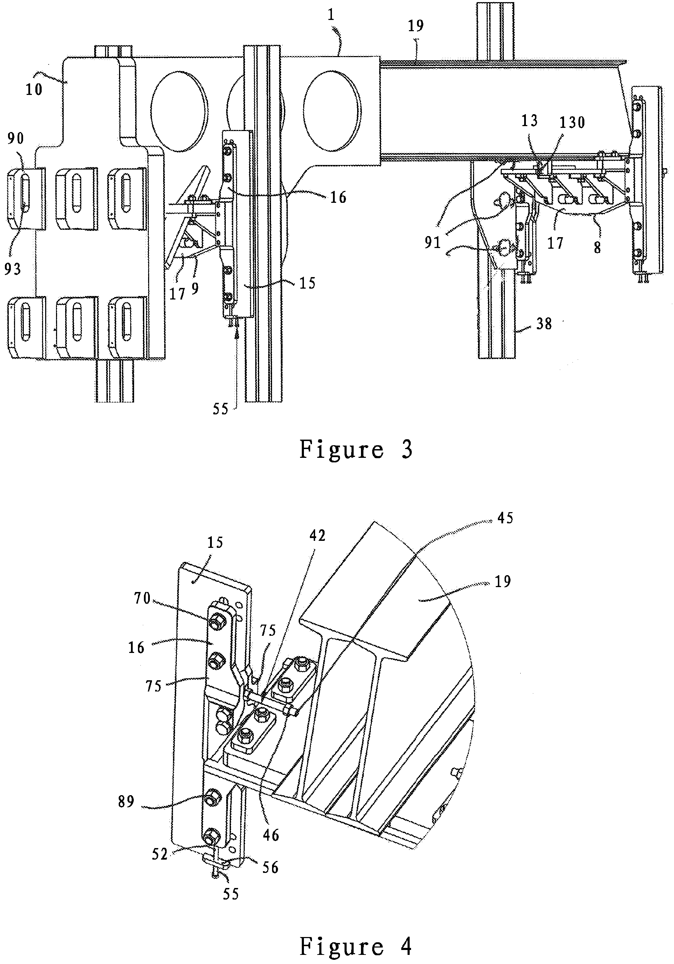

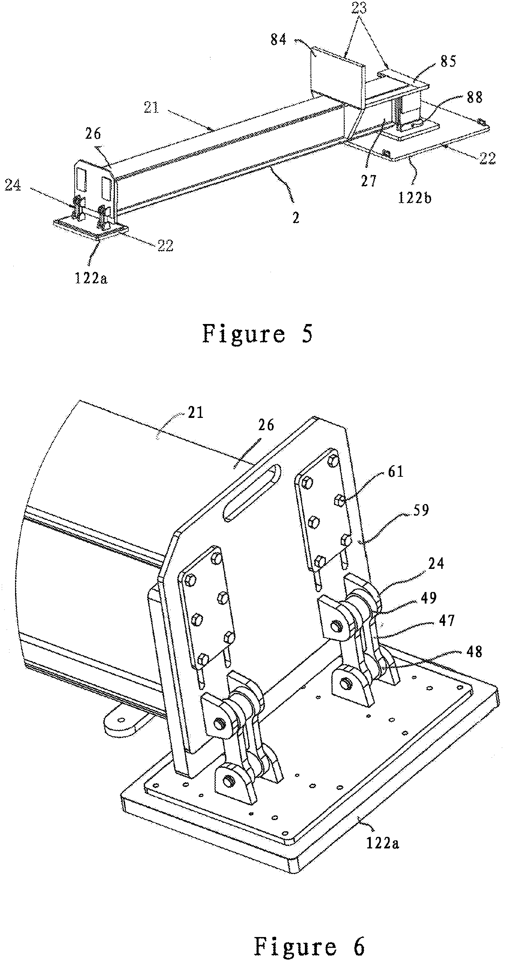

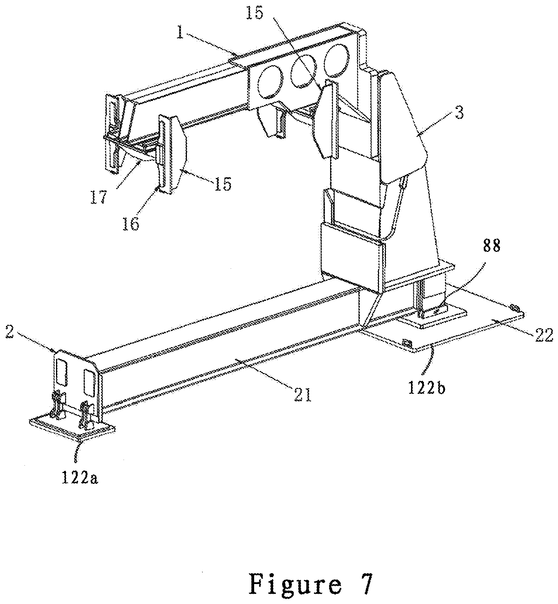

As shown in Figures 1 to 9, a detachable turner beam apparatus for turning a wind turbine blade mould of the present invention comprises an upper beam 1, a lower beam 2, and a turner arm 3 connecting the upper beam 1 and the lower beam 2. The upper and lower beams 1, 2 are preferably welded box beams.

The upper beam 1 comprises an upper beam element 19 having a first free end 6 and an opposite second end 7. The second end 7 is connected to the turner arm 3 by a first turner arm connection mechanism 10 mounted on the upper beam element 19.

The upper beam 1 further comprises first and second plate mounting mechanisms 8, 9 which are mutually spaced along the length of the upper beam element 19 and are respectively mounted towards the first and second ends 6, 7 of the upper beam element 19. Each of the plate mounting mechanisms 8, 9 respectively comprises a fitting plate 15 which is configured to be detachably fitted to a respective longitudinal side of an upper mould part of a wind turbine blade mould.

The detachable turner beam apparatus is in use removably fitted to an upper mould 5 of a wind turbine blade mould. The upper mould 5 has a framework structure 38 for supporting an upper moulding surface. The fitting plates 15 are fixed to the framework structure 38 of the upper mould 5 by means of threaded screws 91. Each fitting plate 15 comprises two orthogonal plate elements 100, 102, defining therebetween an elongate upwardly extending inner corner surface 104 for mounting to an elongate spar 106 of the framework structure 38 of the upper mould 5.

The first and second plate mounting mechanisms 8, 9 are adjustable whereby the respective fitting plate 15 is movable in at least two orthogonal directions, preferably three orthogonal directions, relative to the upper beam element 19 to a desired position and the respective fitting plate 15 can be fixed in the desired position.

Each of the first and second plate mounting mechanisms 8, 9 comprises a transverse transition adjusting plate 17 adjustably fitted to the upper beam 1. The transverse transition adjusting plate 17 is movable longitudinally along the upper beam 1. Each of the first and second plate mounting mechanisms 8, 9 further comprises a first fixing mechanism 30 for fixing the transverse transition adjusting plate 17 at a desired longitudinal position along the upper beam 1.

Each of the first and second plate mounting mechanisms 8, 9 further comprises a transverse transition fixing plate 14 which is fixed to the upper beam 1 at a fixed position. Each transverse transition adjusting plate 17 is adjustably fixed to the respective transverse transition fixing plate 14 by the respective first fixing mechanism 30. The first fixing mechanism 30 comprises a plurality of bolts 51. The bolts 51 pass through longitudinally elongated adjusting holes 53 in the transverse transition adjusting plate 17 and fixing bolt holes 57 in the transverse transition fixing plate 14, so that the transverse transition adjusting plate 17 can move longitudinally with respect to the transverse transition fixing plate 14. Additionally, the bolts 51 pass through transversely elongated adjusting holes 67 in the transverse transition adjusting plate 17 and fixing bolt holes 79 in the transverse transition fixing plate 14, so that the transverse transition adjusting plate 17 can move transversely with respect to the transverse transition fixing plate 14.

Each of the first and second plate mounting mechanisms 8, 9 comprises a first adjusting mechanism 32 fitted between the transverse transition adjusting plate 17 and the transverse transition fixing plate 14 or part of the upper beam 1 adjacent thereto. The first adjusting mechanism 32 is arranged for adjusting the position of the transverse transition adjusting plate 17 relative to the transverse transition fixing plate 14 in a direction extending longitudinally along the upper beam 1. The first adjusting mechanism 32 comprises a first adjusting bolt 130 threadably fitted to a first threaded coupling 13 which is in a fixed position relative to the upper beam 1, and the first adjusting bolt 130 movably contacts the transverse transition adjusting plate 17.

Each transverse transition adjusting plate 17 comprises a pair of trunnions 40. The trunnions 40 extend in opposite directions transversely away from the upper beam 1. Each of the first and second plate mounting mechanisms 8, 9 further comprises a pair of longitudinal transition adjusting plates 16. Each longitudinal transition adjusting plate 16 is rotatably mounted on a respective trunnion 40. Each longitudinal transition adjusting plate 16 comprises a cavity 41 in which the respective trunnion 40 is received.

A second fixing mechanism 60 is fitted to each respective longitudinal transition adjusting plate 16. The second fixing mechanism 60 is arranged for fixing the longitudinal transition adjusting plate 16 to a desired transverse position orthogonal to the upper beam 1. Each longitudinal transition adjusting plate 16 comprises a pair of plate members 75 fitted around respective opposite sides of the respective trunnion 40. The second fixing mechanism 60 comprises a plurality of bolts 62 extending through the pair of plate members 75 for clamping the pair of plate members 75 in a fixed position relative to the respective trunnion 40.

A second adjusting mechanism 42 is fitted to each respective longitudinal transition adjusting plate 16. The second adjusting mechanism 42 is positioned between the longitudinal transition adjusting plate 16 and the upper beam 1. The second adjusting mechanism 42 is arranged for transversely adjusting the longitudinal transition adjusting plate 16 in a direction orthogonal to the upper beam 1. The second adjusting mechanism 42 comprises a second adjusting bolt 45 threadably fitted to a second threaded coupling 46 which is in a fixed position relative to the upper beam 1 or relative to the transverse transition adjusting plate 17. The second adjusting bolt 45 movably contacts the longitudinal transition adjusting plate 16.

Each longitudinal transition adjusting plate 16 has a respective fitting plate 15 fitted thereto. The fitting plate 15 is sandwiched between the pair of plate members 75. A third fixing mechanism 70, comprising bolts 89, is fitted to each respective longitudinal transition adjusting plate 16. The third fixing mechanism 70 is arranged for fixing the fitting plate 15 at a desired height relative to the respective longitudinal transition adjusting plate 16.

A third adjusting mechanism 52 is fitted to each respective longitudinal transition adjusting plate 16. The third adjusting mechanism 52 is positioned between the fitting plate 15 and the longitudinal transition adjusting plate 16. The third adjusting mechanism 52 is arranged for vertically adjusting the fitting plate 15 relative to the longitudinal transition adjusting plate 16. The third adjusting mechanism 52 comprises a third adjusting bolt 55 threadably fitted to a third threaded coupling 56 which is in a fixed position relative to the fitting plate 15. The third adjusting bolt 55 movably contacts the longitudinal transition adjusting plate 16.

The first turner arm connection mechanism 10 comprises a plurality of vertically oriented parallel plates 90 extending in a direction parallel to the upper beam 1. The vertically oriented parallel plates 90 are spaced from each other. The vertically oriented parallel plates 90 are removably connected to an upper end 92 of the turner arm 3. The vertically oriented parallel plates 90 comprise vertically extended through-holes 93. A plurality of bolts 94 pass through the through-holes 93 for removably connecting the upper beam 1 to the upper end 92 of the turner arm 3. The height of the upper beam 1 can be adjusted by adjusting the positions of the through-holes 93 relative to the bolts 94.

The detachable turner beam apparatus is in use also removably arranged together with a lower mould 4 of a wind turbine blade mould. The lower mould 4 has a framework structure 39 for supporting a lower moulding surface. The lower beam 2 passes through the framework structure 39 of the lower mould 5 and is not in contact with the lower mould 5.

The lower beam 2 comprises a lower beam element 21 having a first free end 26 and an opposite second end 27. The second end 27 is connected to the turner arm 3 by a second turner arm connection mechanism 23 mounted on the lower beam element 19. A bottom support 22 is installed beneath the lower beam element 21.

The second turner arm connection mechanism 23 comprises an upright plate 84 extending along a direction transverse to the lower beam 2 and a base plate 85 extending away from a lower portion of the upright plate 84 in a direction parallel to the longitudinal direction of the lower beam 2. The turner arm 3 is mounted adjacent to the upright plate 84 and on the base plate 85.

The bottom support 22 comprises a pair of bottom bearing plates 122a, 122b. The bottom bearing plates 122a, 122b are fixed to the ground by expansion bolts or chemical anchor bolts. Each bottom bearing plate 122a, 122b is installed beneath a respective one of the first free end 26 and the opposite second end 27 of the lower beam 2. A level adjusting device 24 is fitted between the first free end 26 of the lower beam 2 and the respective bottom bearing plate 122a therebeneath. The opposite second end 27 is fitted to the respective bottom bearing plate 122b therebeneath by a hinge mechanism 88 having a horizontal hinge axis.

The level adjusting device 24 comprises a link mechanism 47. The link mechanism 47 has a first end 48 hingedly fitted to the respective bottom bearing plate 122a and a second end 49 hingedly fitted to a support plate 59 that is adjustably fitted by bolts 61 to the first free end 26. Tightening of the bolts 61 clamps the first free end 26 to the support plate 59, and sets the first free end 26 at a desired vertical position.

The turner arm 3 is connected to a hydraulic oil cylinder and to an electronic control unit therefor.

There is now described a method of fitting the detachable turner beam apparatus to the wind turbine blade mould.

In the method, the lower beam 2 can remain out of contact with the lower mould 4 and the associated framework structure 39, which provides the advantage that the stress on the upper mould 5 during the turning operation can pass into the ground through the lower beam 2, and does not pass through the lower mould 4.

Furthermore, in the method the fitting plates 15 can provide a large surface area for securely fixing by threaded screws 91 to the framework structure 38 of the upper mould 5. After use, the plates 15 can be readily detached from the upper mould 5 and then the detachable turner beam apparatus can be re-used with another wind blade mould.

The fitting plates 15 can be individually moved in at least two, preferably three, orthogonal directions relative to the upper beam element 19 to a desired position and the respective fitting plate 15 can be fixed in the desired position. The position of the fitting plates 15 can be adjusted to fit to another wind blade mould. The fitting plates 15 can each be provided with a span-wise adjustment, a chord-wise adjustment and a height-wise adjustment.

The chord-wise adjustment is achieved by adjusting the longitudinal positions of the transverse transition adjusting plates 17 relative to the transverse transition fixing plates 14 along the length of the upper beam element 19. This chord-wise adjustment uses the first adjusting mechanism 32.

The span-wise adjustment is achieved by adjusting the transverse positions of the longitudinal transition adjusting plates 16 relative to the transverse transition fixing plates 14. This span-wise adjustment uses the second adjusting mechanism 42. The span-wise adjustment may also be achieved by adjusting the positions of the transverse transition adjusting plates 17 relative to the transverse transition fixing plates 14 transverse to the length of the upper beam element 19.

The height-wise adjustment is achieved by adjusting the vertical positions of the fitting plates 15 relative to the longitudinal transition adjusting plates 16. This height-wise adjustment uses the third adjusting mechanism 52.

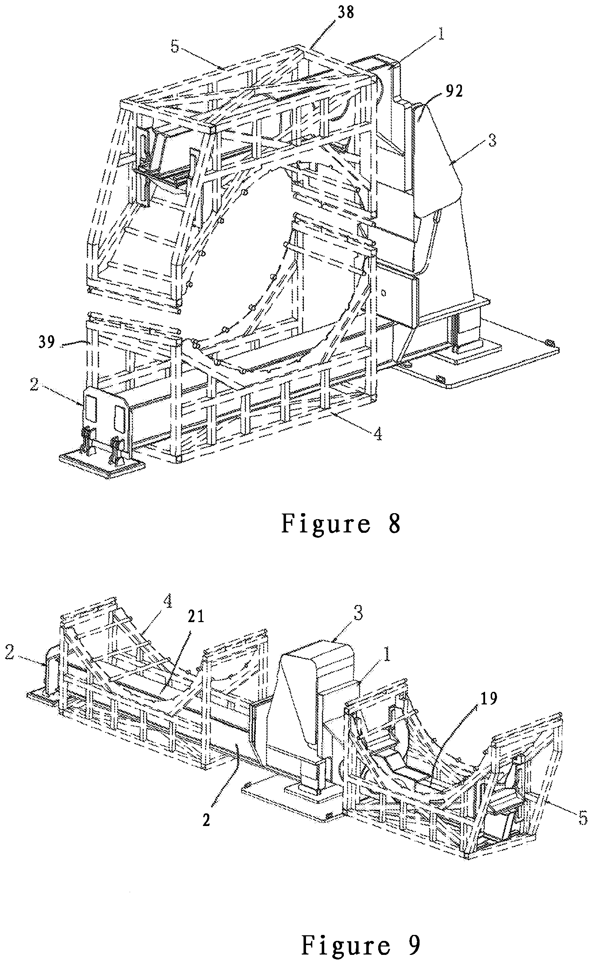

Step 1. Connect the two ends of the turner arm 3 with the first turner arm connection mechanism 10 and the second turner arm connection mechanism 23 respectively. The bearing bottom plates 112a, 122b are fixed to the ground by expansion bolts or chemical anchor bolts, and the lower beam element 21 is extended into the steel framework structure 39 of the lower mould 4 of the wind turbine blade mould, at which time the lower beam 2 is not in contact with the lower mould 4 and is at the mould open position, as shown in Figure 9. The level adjusting device 24 is adjusted, by raising or lowering the position of the first free end 26 relative to the support plate 59 to achieve the desired horizontal position of the lower beam element 21, and then the position of the first free end 26 is fixed by tightening the bolts 61 to clamp the first free end 26 to the support plate 59.

Step 2. After the steel framework structure 39 of the lower mould 4 has been set, the position of the upper mould 5 can be set by adjusting the transverse, longitudinal, front and rear positions of the upper beam 1.

When the transverse position is adjusted, the bolts 51 are removed from the transverse transition adjusting plate 17 and the transverse transition fixing plate 14. The transverse transition adjusting plate 17 is manually pushed so that the transverse transition adjusting plate 17 is moved laterally above and relative to the transverse transition fixing plate 14. When the transverse transition adjusting plate 17 is moved to the defined position, the bolts 51 fix the transverse transition adjusting plate 17 on the transverse transition fixing plate 14.

When the longitudinal position is adjusted, the fitting plate 15 is fixed to the steel framework structure 38 of the upper mould 5 by means of threaded screws 91 and then the fitting plate 15 is fixed to the longitudinal transition adjusting plate 16 by the bolts 89. The four longitudinal transition adjusting plates 16 are then fitted to the respective side of the upper beam element 19. The fitting plate 15 and the longitudinal transition adjusting plate 16 to the framework structure 38 of the upper mould 5 are longitudinally extended so that the longitudinal connecting area is enlarged, the stress by the bolt connection is dispersed so that the longitudinal connection strength is increased, and compensating for any longitudinal error generated in the installation process of the upper beam 1 and the upper mould steel frame by providing a reserve adjustment margin for the installation process.

When the front and rear positions are adjusted, the adjusting plate 17 of the first plate mounting mechanism 8 at the front of the upper beam 1, and the adjusting plate 17 of the second plate mounting mechanism 9 at the rear of the upper beam 1, are each bolted by the bolts 51 to the respective transverse transition fixing plate 14. When the installation of the upper beam 1 deviates from the desired front and rear positions, the bolts 51 are unscrewed and the first adjusting bolt 130 is screwed in or out with respect to the threaded coupling 13 and thereby with respect to the transverse transition fixing plate 14. This action adjusts the position of the front and rear adjusting plates 17 with respect to the respective transverse transition fixing plate 14, thereby compensating the front and rear positions of the whole upper beam 1 to be moved by the movement of the front and rear positions of the front and rear adjusting plates 17. Step 3. When it is necessary to close the mould, the hydraulic cylinder is controlled to work by the electronic control unit. The piston rod of the hydraulic cylinder pushes one end of the turner arm 3 and drives the upper beam 1 to rotate with respect to the lower beam 2, at which point, the upper beam 1 drives the upper mould 5 to close the mould to the lower mould 4 to complete the mould closing action. The stress generated in the process is transmitted to the ground through the lower beam 2, as shown in Figure 8.

The above embodiments are only for illustrating the technical conception and characteristics of the present invention, and the purpose of the embodiments are to enable a person skilled in the art to understand the content of the present invention and implement the same, and the protection scope of the present invention cannot be limited by the embodiments, because it is defined by the appended claims.

## Claims

1. A detachable turner beam apparatus for turning a wind turbine blade mould, the detachable turner beam apparatus comprising: an upper beam (1), a lower beam (2), and a turner arm (3) connecting the upper beam (1) and the lower beam (2);
wherein the upper beam (1) comprises an upper beam element (19) having a first free end (6) and an opposite second end (7), the second end (7) being connected to the turner arm (3) by a first turner arm connection mechanism (10) mounted on the upper beam element (19),; and
the lower beam (2) comprises: a lower beam element (21) having a first free end (26) and an opposite second end (27), the second end (27) being connected to the turner arm (3) by a second turner arm connection mechanism (23) mounted on the lower beam element (19), and a bottom support (22) installed beneath the lower beam element (21); **characterised by** the upper beam (1) further comprising first and second plate mounting mechanisms (8, 9) which are mutually spaced along the length of the upper beam element (19) and are respectively mounted towards the first and second ends (6, 7) of the upper beam element (19), each of the plate mounting mechanisms (8, 9) respectively comprising a fitting plate (15) which is configured to be detachably fitted to a respective longitudinal side of an upper mould part of a wind turbine blade mould, wherein the first and second plate mounting mechanisms (8, 9) are adjustable whereby the respective fitting plate (15) is movable in at least two orthogonal directions relative to the upper beam element (19) to a desired position and the respective fitting plate (15) can be fixed in the desired position.

2. The detachable turner beam apparatus for turning a wind turbine blade mould according to claim 1, wherein each of the first and second plate mounting mechanisms (8, 9) comprises a transverse transition adjusting plate (17) adjustably fitted to the upper beam (1), wherein the transverse transition adjusting plate (17) is movable longitudinally along the upper beam (1), and further comprises a first fixing mechanism (30) for fixing the transverse transition adjusting plate (17) at a desired longitudinal position along the upper beam (1).

3. The detachable turner beam apparatus for turning a wind turbine blade mould according to claim 2, wherein each of the first and second plate mounting mechanisms (8, 9) further comprises a transverse transition fixing plate (14) which is fixed to the upper beam (1) at a fixed position, and each transverse transition adjusting plate (17) is adjustably fixed to the respective transverse transition fixing plate (14) by the respective first fixing mechanism (30).

4. The detachable turner beam apparatus for turning a wind turbine blade mould according to claim 3, wherein the first fixing mechanism (30) comprises a plurality of bolts, and optionally wherein the bolts pass through transversely elongated adjusting holes in the transverse transition adjusting plate (17) and fixing bolt holes in the transverse transition fixing plate (14), so that the transverse transition adjusting plate (17) can move transversely with respect to the transverse transition fixing plate (14) and/or the bolts pass through longitudinally elongated adjusting holes in the transverse transition adjusting plate (17) and fixing bolt holes in the transverse transition fixing plate (14), so that the transverse transition adjusting plate (17) can move longitudinally with respect to the transverse transition fixing plate (14), and further optionally wherein the first adjusting mechanism (32) comprises a first adjusting bolt (130) threadably fitted to a first threaded coupling (13) which is in a fixed position relative to the upper beam (1), and the first adjusting bolt (130) movably contacts the transverse transition adjusting plate (17).

5. The detachable turner beam apparatus for turning a wind turbine blade mould according to claim 3, wherein each of the first and second plate mounting mechanisms (8, 9) comprises a first adjusting mechanism (32) fitted between the transverse transition adjusting plate (17) and the transverse transition fixing plate (14) or part of the upper beam (1) adjacent thereto, the first adjusting mechanism (32) being arranged for adjusting the position of the transverse transition adjusting plate (17) relative to the transverse transition fixing plate (14) in a direction extending longitudinally along the upper beam (1).

6. The detachable turner beam apparatus for turning a wind turbine blade mould according to claim 2, wherein each transverse transition adjusting plate (17) comprises a pair of trunnions (40), the trunnions (40) extending in opposite directions transversely away from the upper beam (1), and each of the first and second plate mounting mechanisms (8, 9) further comprises a pair of longitudinal transition adjusting plates (16), each longitudinal transition adjusting plate (16) being rotatably mounted on a respective trunnion (40), wherein each longitudinal transition adjusting plate (16) comprises a cavity (41) in which the respective trunnion (40) is received, wherein each longitudinal transition adjusting plate (16) has a respective fitting plate (15) fitted thereto.

7. The detachable turner beam apparatus for turning a wind turbine blade mould according to claim 6, further comprising a second adjusting mechanism (42) fitted to each respective longitudinal transition adjusting plate (16), the second adjusting mechanism (42) being positioned between the longitudinal transition adjusting plate (16) and the upper beam (1), the second adjusting mechanism (42) being arranged for transversely adjusting the longitudinal transition adjusting plate (16) in a direction orthogonal to the upper beam (1), and optionally wherein the second adjusting mechanism (42) comprises a second adjusting bolt (45) threadably fitted to a second threaded coupling (46) which is in a fixed position relative to the upper beam (1) or relative to the transverse transition adjusting plate (17), and the second adjusting bolt (45) movably contacts the longitudinal transition adjusting plate (16).

8. The detachable turner beam apparatus for turning a wind turbine blade mould according to claim 6, further comprising a second fixing mechanism (60) fitted to each respective longitudinal transition adjusting plate (16), the second fixing mechanism (60) being arranged for fixing the longitudinal transition adjusting plate (16) to a desired transverse position orthogonal to the upper beam (1), and optionally (i) wherein each longitudinal transition adjusting plate (16) comprises a pair of plate members (75) fitted around respective opposite sides of the respective trunnion (40), and the second fixing mechanism (60) comprises a plurality of bolts (62) extending through the pair of plate members (75) for clamping the pair of plate members (75) in a fixed position relative to the respective trunnion (40); and further optionally (ii) wherein the fitting plate (15) is sandwiched between the pair of plate members (75).

9. The detachable turner beam apparatus for turning a wind turbine blade mould according to claim 6, further comprising a third adjusting mechanism (52) fitted to each respective longitudinal transition adjusting plate (16), the third adjusting mechanism (52) being positioned between the fitting plate (15) and the longitudinal transition adjusting plate (16), the third adjusting mechanism (52) being arranged for vertically adjusting the fitting plate (15) relative to the longitudinal transition adjusting plate (16), and optionally wherein the third adjusting mechanism (52) comprises a third adjusting bolt (55) threadably fitted to a third threaded coupling (56) which is in a fixed position relative to the fitting plate (15), and the third adjusting bolt (55) movably contacts the longitudinal transition adjusting plate (16).

10. The detachable turner beam apparatus for turning a wind turbine blade mould according to claim 6, further comprising a third fixing mechanism (70) fitted to each respective longitudinal transition adjusting plate (16), the third fixing mechanism (70) being arranged for fixing the fitting plate (15) at a desired height relative to the respective longitudinal transition adjusting plate (16).

11. The detachable turner beam apparatus for turning a wind turbine blade mould according to claim 1, wherein the first turner arm connection mechanism (10) comprises a plurality of vertically oriented parallel plates (90) extending in a direction parallel to the upper beam (1), the vertically oriented parallel plates (90) being spaced from each other, wherein the vertically oriented parallel plates (90) are removably connected to an upper end (92) of the turner arm (3), and optionally wherein the vertically oriented parallel plates (90) comprise vertically extended through-holes (93), a plurality of bolts (94) pass through the through-holes (93) for removably connecting the upper beam (1) to the upper end (92) of the turner arm (3), and the height of the upper beam (1) can be adjusted by adjusting the positions of the through-holes (93) relative to the bolts (94).

12. The detachable turner beam apparatus for turning a wind turbine blade mould according to claim 1, wherein the second turner arm connection mechanism (23) comprises an upright plate (84) extending along a direction transverse to the lower beam (2) and a base plate (85) extending away from a lower portion of the upright plate (84) in a direction parallel to the longitudinal direction of the lower beam (2), wherein the turner arm (3) is mounted adjacent to the upright plate (84) and on the base plate (85).

13. The detachable turner beam apparatus for turning a wind turbine blade mould according to claim 1, wherein the bottom support (22) comprises a pair of bottom bearing plates (122a, 122b), each bottom bearing plate (122a, 122b) being installed beneath a respective one of the first free end (26) and the opposite second end (27) of the lower beam (2), and optionally wherein the lower beam (2) further comprises a level adjusting device (24), wherein the level adjusting device (24) is fitted between the first free end (26) of the lower beam (2) and the respective bottom bearing plate (122a) therebeneath, and the opposite second end (27) is fitted to the respective bottom bearing plate (122b) therebeneath by a hinge mechanism (88) having a horizontal hinge axis, and further optionally wherein the level adjusting device (24) comprises a link mechanism (47), the link mechanism (47) having a first end (48) hingedly fitted to the respective bottom bearing plate (122a) and a second end (49) hingedly fitted to a support plate (59) that is adjustably fitted to the first free end (26).

14. The detachable turner beam apparatus for turning a wind turbine blade mould according to claim 1, (i) wherein the upper beam (1) is a welded box beam; or (ii) wherein the bottom support (22) is fixed to the ground by expansion bolts or chemical anchor bolts; or (iii) wherein the turner arm (3) is connected to a hydraulic oil cylinder and to an electronic control unit therefor; or (iv) wherein each fitting plate (15) comprises two orthogonal plate elements (100, 102), defining therebetween an elongate upwardly extending inner corner surface (104) for mounting to an elongate spar (106) of a framework structure (38) of an upper mould (5).

15. The detachable turner beam apparatus for turning a wind turbine blade mould according to claim 1 (A) in combination with an upper mould (5) of a wind turbine blade mould, the upper mould having a framework structure (38) for supporting an upper moulding surface, wherein the fixing plates (15) are fixed to the framework structure (38) of the upper mould (5) by means of threaded screws, or (B) in combination with a lower mould (4) of a wind turbine blade mould, the lower mould (4) having a framework structure (39) for supporting a lower moulding surface, wherein the lower beam (2) passes through the framework structure (39) of the lower mould (5) and is not in contact with the lower mould (5).

## Patentansprüche

1. Abnehmbare Wendebalkenvorrichtung zum Drehen einer Windturbinenblattform, wobei die abnehmbare Wendebalkenvorrichtung aufweist: einen oberen Balken (1), einen unteren Balken (2) und einen Wendearm (3), der den oberen Balken (1) und den unteren Balken (2) verbindet;
wobei der obere Balken (1) ein oberes Balkenelement (19) mit einem ersten freien Ende (6) und einem gegenüberliegenden zweiten Ende (7) aufweist, wobei das zweite Ende (7) mit dem Wendearm (3) durch einen ersten Wendearm-Verbindungsmechanismus (10) verbunden ist, der am oberen Balkenelement (19) montiert ist; und
der untere Balken (2) aufweist: ein unteres Balkenelement (21) mit einem ersten freien Ende (26) und einem gegenüberliegenden zweiten Ende (27), wobei das zweite Ende (27) mit dem Wendearm (3) durch einen zweiten Wendearm-Verbindungsmechanismus (23) verbunden ist, der am unteren Balkenelement (19) montiert ist, und eine untere Stütze (22), die unter dem unteren Balkenelement (21) installiert ist;
**dadurch gekennzeichnet, dass** der obere Balken (1) ferner erste und zweite Plattenmontagemechanismen (8, 9) aufweist, die entlang der Länge des oberen Balkenelements (19) voneinander beabstandet sind und jeweils in Richtung der ersten und zweiten Enden (6, 7) des oberen Balkenelements (19) montiert sind, wobei jeder der Plattenmontagemechanismen (8, 9) jeweils eine Passplatte (15) aufweist, die konfiguriert ist, um abnehmbar an einer jeweiligen Längsseite eines oberen Formteils einer Windturbinenblattform angebracht zu werden, wobei die ersten und zweiten Plattenmontagemechanismen (8, 9) einstellbar sind, wodurch die jeweilige Passplatte (15) in wenigstens zwei orthogonalen Richtungen relativ zum oberen Balkenelement (19) in eine gewünschte Position bewegbar ist und die jeweilige Passplatte (15) in der gewünschten Position fixiert werden kann.

2. Abnehmbare Wendebalkenvorrichtung zum Drehen einer Windturbinenblattform nach Anspruch 1, wobei jeder der ersten und zweiten Plattenmontagemechanismen (8, 9) eine Querübergangseinstellplatte (17) aufweist, die einstellbar am oberen Balken (1) angebracht ist, wobei die Querübergangseinstellplatte (17) in Längsrichtung entlang des oberen Balkens (1) beweglich ist, und ferner einen ersten Befestigungsmechanismus (30) zum Befestigen der Querübergangseinstellplatte (17) an einer gewünschten Längsposition entlang des oberen Balkens (1) aufweist.

3. Abnehmbare Wendebalkenvorrichtung zum Drehen einer Windturbinenblattform nach Anspruch 2, wobei jeder der ersten und zweiten Plattenmontagemechanismen (8, 9) ferner eine Querübergangsbefestigungsplatte (14) aufweist, die am oberen Balken (1) an einer festen Position befestigt ist, und jede Querübergangseinstellplatte (17) durch den jeweiligen ersten Befestigungsmechanismus (30) einstellbar an der jeweiligen Querübergangsbefestigungsplatte (14) befestigt ist.

4. Abnehmbare Wendebalkenvorrichtung zum Drehen einer Windturbinenblattform nach Anspruch 3, wobei der erste Befestigungsmechanismus (30) mehrere Bolzen aufweist, und wobei optional die Bolzen durch quer verlaufende Einstelllöcher in der Querübergangseinstellplatte (17) und Befestigungsbolzenlöcher in der Querübergangsbefestigungsplatte (14) verlaufen, so dass die Querübergangseinstellplatte (17) sich in Bezug auf die Querübergangsbefestigungsplatte (14) quer bewegen kann und/oder die Bolzen durch in Längsrichtung längliche Einstelllöcher in der Querübergangseinstellplatte (17) und Befestigungsbolzenlöcher in der Querübergangsbefestigungsplatte (14) hindurchgehen, so dass die Querübergangseinstellplatte (17) sich in Bezug auf die Querübergangsbefestigungsplatte (14) in Längsrichtung bewegen kann, und wobei ferner optional der erste Einstellmechanismus (32) einen ersten Einstellbolzen (130) aufweist, der an einer ersten Gewindekupplung (13) verschraubbar angebracht ist, die in einer festen Position relativ zum oberen Balken (1) ist, und der erste Einstellbolzen (130) die Querübergangseinstellplatte (17) beweglich berührt.

5. Abnehmbare Wendebalkenvorrichtung zum Drehen einer Windturbinenblattform nach Anspruch 3, wobei jeder der ersten und zweiten Plattenmontagemechanismen (8, 9) einen ersten Einstellmechanismus (32) aufweist, der zwischen der Querübergangseinstellplatte (17) und der Querübergangsbefestigungsplatte (14) oder einem daran angrenzenden Teil des oberen Balkens (1) angebracht ist, wobei der erste Einstellmechanismus (32) angeordnet ist zum Einstellen der Position der Querübergangseinstellplatte (17) relativ zur Querübergangsbefestigungsplatte (14) in einer Richtung, die sich in Längsrichtung entlang des oberen Balkens (1) erstreckt.

6. Abnehmbare Wendebalkenvorrichtung zum Drehen einer Windturbinenblattform nach Anspruch 2, wobei jede Querübergangseinstellplatte (17) ein Paar von Zapfen (40) aufweist, wobei sich die Zapfen (40) in entgegengesetzte Richtungen quer vom oberen Balken (1) weg erstrecken, und jeder der ersten und zweiten Plattenmontagemechanismen (8, 9) ferner ein Paar von Längsübergangseinstellplatten (16) aufweist, wobei jede Längsübergangseinstellplatte (16) drehbar auf einem jeweiligen Zapfen (40) montiert ist, wobei jede Längsübergangseinstellplatte (16) einen Hohlraum (41) aufweist, in dem der jeweilige Zapfen (40) aufgenommen ist, wobei jede Längsübergangseinstellplatte (16) eine jeweilige Passplatte (15) daran angebracht hat.

7. Abnehmbare Wendebalkenvorrichtung zum Drehen einer Windturbinenblattform nach Anspruch 6, ferner aufweisend einen zweiten Einstellmechanismus (42), der an jeder jeweiligen Längsübergangseinstellplatte (16) angebracht ist, wobei der zweite Einstellmechanismus (42) zwischen der Längsübergangseinstellplatte (16) und dem oberen Balken (1) positioniert ist, wobei der zweite Einstellmechanismus (42) zum Querverstellen der Längsübergangseinstellplatte (16) in einer Richtung orthogonal zum oberen Balken (1) angeordnet ist, und wobei optional der zweite Einstellmechanismus (42) einen zweiten Einstellbolzen (45) aufweist, der an einer zweiten Gewindekupplung (46) schraubbar angebracht ist, die in einer festen Position relativ zu dem oberen Balken (1) oder relativ zur Querübergangseinstellplatte (17) ist, und der zweite Einstellbolzen (45) die Längsübergangseinstellplatte (16) beweglich berührt.

8. Abnehmbare Wendebalkenvorrichtung zum Drehen einer Windturbinenblattform nach Anspruch 6, ferner aufweisend einen zweiten Befestigungsmechanismus (60), der an jeder jeweiligen Längsübergangseinstellplatte (16) angebracht ist, wobei der zweite Befestigungsmechanismus (60) angeordnet ist zum Befestigen der Längsübergangseinstellplatte (16) in einer gewünschten Querposition orthogonal zum oberen Balken (1) angeordnet ist, und wobei optional (i) jede Längsübergangseinstellplatte (16) ein Paar von Plattenelementen (75) aufweist, die um jeweilige gegenüberliegende Seiten des jeweiligen Zapfens (40) angebracht sind, und der zweite Befestigungsmechanismus (60) mehrere Bolzen (62) aufweist, die sich durch das Paar von Plattenelementen (75) erstrecken zum Festklemmen des Paars von Plattenelementen (75) in einer festen Position relativ zum jeweiligen Zapfen (40), und wobei ferner optional (ii) die Passplatte (15) zwischen dem Paar von Plattenelementen (75) eingelegt ist.

9. Abnehmbare Wendebalkenvorrichtung zum Drehen einer Windturbinenblattform nach Anspruch 6, ferner aufweisend einen dritten Einstellmechanismus (52), der an jeder jeweiligen Längsübergangseinstellplatte (16) angebracht ist, wobei der dritte Einstellmechanismus (52) zwischen der Passplatte (15) und der Längsübergangseinstellplatte (16) angeordnet ist, wobei der dritte Einstellmechanismus (52) angeordnet ist zum vertikalen Einstellen der Passplatte (15) relativ zur Längsübergangseinstellplatte (16), und wobei optional der dritte Einstellmechanismus (52) einen dritten Einstellbolzen (55) aufweist, der schraubbar an einer dritten Gewindekupplung (56) angebracht ist, die in einer festen Position relativ zur Passplatte (15) ist, und der dritte Einstellbolzen (55) die Längsübergangseinstellplatte (16) beweglich berührt.

10. Abnehmbare Wendebalkenvorrichtung zum Drehen einer Windturbinenblattform nach Anspruch 6, ferner aufweisend einen dritten Befestigungsmechanismus (70), der an jeder jeweiligen Längsübergangseinstellplatte (16) angebracht ist, wobei der dritte Befestigungsmechanismus (70) angeordnet ist zum Befestigen der Passplatte (15) in einer gewünschten Höhe relativ zur jeweiligen Längsübergangseinstellplatte (16).

11. Abnehmbare Wendebalkenvorrichtung zum Drehen einer Windturbinenblattform nach Anspruch 1, wobei der erste Wendearm-Verbindungsmechanismus (10) mehrere vertikal ausgerichtete parallele Platten (90) aufweist, die sich in einer Richtung parallel zum oberen Balken (1) erstrecken, wobei die vertikal ausgerichteten parallelen Platten (90) voneinander beabstandet sind, wobei die vertikal ausgerichteten parallelen Platten (90) lösbar mit einem oberen Ende (92) des Wendearms (3) verbunden sind, und wobei optional die vertikal ausgerichteten parallelen Platten (90) vertikal ausgedehnte Durchgangslöcher (93) aufweisen, mehrere Bolzen (94) durch die Durchgangslöcher (93) verlaufen zum lösbaren Verbinden des oberen Balkens (1) mit dem oberen Ende (92) des Wendearms (3), und die Höhe des oberen Balkens (1) durch Einstellen der Positionen der Durchgangslöcher (93) relativ zu den Bolzen (94) eingestellt werden kann.

12. Abnehmbare Wendebalkenvorrichtung zum Drehen einer Windturbinenblattform nach Anspruch 1, wobei der zweite Wendearm-Verbindungsmechanismus (23) eine aufrechte Platte (84), die sich entlang einer Richtung quer zum unteren Balken (2) erstreckt, und eine Grundplatte (85), die sich von einem unteren Abschnitt der aufrechten Platte (84) in einer Richtung parallel zur Längsrichtung des unteren Balkens (2) weg erstreckt, aufweist, wobei der Wendearm (3) neben der aufrechten Platte (84) und auf der Grundplatte (85) montiert ist.

13. Abnehmbare Wendebalkenvorrichtung zum Drehen einer Windturbinenblattform nach Anspruch 1, wobei die untere Stütze (22) ein Paar von unteren Lagerplatten (122a, 122b) aufweist, wobei jede untere Lagerplatte (122a, 122b) unter einem jeweiligen des ersten freien Endes (26) und des gegenüberliegenden zweiten Endes (27) des unteren Balkens (2) installiert ist, und wobei optional der untere Balken (2) ferner eine Niveaueinstellvorrichtung (24) aufweist, wobei die Niveaueinstellvorrichtung (24) zwischen dem ersten freien Ende (26) des unteren Balkens (2) und der jeweiligen unteren Lagerplatte (122a) darunter angebracht ist, und das gegenüberliegende zweite Ende (27) an der jeweiligen unteren Lagerplatte (122b) darunter durch einen Scharniermechanismus (88) mit einer horizontalen Scharnierachse angebracht ist, und wobei optional ferner die Niveaueinstellvorrichtung (24) einen Verbindungsmechanismus (47) aufweist, wobei der Verbindungsmechanismus (47) ein erstes Ende (48) hat, das gelenkig an der jeweiligen unteren Lagerplatte (122a) angebracht ist, und ein zweites Ende (49) hat, das gelenkig an einer Stützplatte (59) angebracht ist, die einstellbar am ersten freien Ende (26) angebracht ist.

14. Abnehmbare Wendebalkenvorrichtung zum Drehen einer Windturbinenblattform nach Anspruch 1, (i) wobei der obere Balken (1) ein geschweißter Kastenbalken ist; oder (ii) wobei die untere Stütze (22) durch Spreizbolzen oder chemische Ankerbolzen am Boden befestigt ist; oder (iii) wobei der Wendearm (3) mit einem hydraulischen Ölzylinder und mit einer elektronischen Steuereinheit dafür verbunden ist; oder (iv) wobei jede Passplatte (15) zwei orthogonale Plattenelemente (100, 102) aufweist, die dazwischen eine längliche, sich nach oben erstreckende innere Eckfläche (104) zum Befestigen an einem länglichen Holm (106) einer Gerüststruktur (38) einer oberen Form (5) definieren.

15. Abnehmbare Wendebalkenvorrichtung zum Drehen einer Windturbinenblattform nach Anspruch 1 (A) in Kombination mit einer oberen Form (5) einer Windturbinenblattform, wobei die obere Form eine Rahmenstruktur (38) zum Tragen einer oberen Formfläche hat, wobei die Passplatten (15) an der Rahmenstruktur (38) der oberen Form (5) mittels Gewindeschrauben befestigt sind, oder (B) in Kombination mit einer unteren Form (4) einer Windturbinenblattform, wobei die untere Form (4) eine Rahmenstruktur (39) zum Tragen einer unteren Formfläche hat, wobei der untere Balken (2) durch die Rahmenstruktur (39) der unteren Form (5) verläuft und nicht in Kontakt mit der unteren Form (5) ist.

## Revendications

1. Appareil à poutre amovible de retournement servant à retourner un moule de pale d'éolienne, l'appareil à poutre amovible de retournement comprenant : une poutre supérieure (1), une poutre inférieure (2) et un bras de retournement (3) reliant la poutre supérieure (1) et la poutre inférieure (2),
dans lequel la poutre supérieure (1) comprend un élément de poutre supérieure (19) ayant une première extrémité libre (6) et une deuxième extrémité opposée (7), la deuxième extrémité (7) étant reliée au bras de retournement (3) au moyen d'un premier mécanisme de liaison de bras de retournement (10) monté sur l'élément de poutre supérieure (19), et dans lequel la poutre inférieure (2) comprend : un élément de poutre inférieure (21) ayant une première extrémité libre (26) et une deuxième extrémité opposée (27), la deuxième extrémité (27) étant reliée au bras de retournement (3) au moyen d'un deuxième mécanisme de liaison de bras de retournement (23) monté sur l'élément de poutre inférieure (19), et un support inférieur (22) installé sous l'élément de poutre inférieure (21),
**caractérisé en ce que** la poutre supérieure (1) comprend en outre des premier et deuxième mécanismes de montage de plaque (8, 9) qui sont mutuellement espacés le long de la longueur de l'élément de poutre supérieure (19) et sont montés respectivement vers les première et deuxième extrémités (6, 7) de l'élément de poutre supérieure (19), chacun des mécanismes de montage de plaque (8, 9) comprenant respectivement une plaque d'ajustement (15) qui est configurée pour être ajustée de manière amovible à un côté longitudinal respectif d'une partie de moule supérieure d'un moule de pale d'éolienne, dans lequel les premier et deuxième mécanismes de montage de plaque (8, 9) sont réglables, moyennant quoi la plaque d'ajustement respective (15) peut se déplacer dans au moins deux directions orthogonales par rapport à l'élément de poutre supérieure (19) et vers une position souhaitée et la plaque d'ajustement respective (15) peut être fixée dans la position souhaitée.

2. Appareil à poutre amovible de retournement servant à retourner un moule de pale d'éolienne selon la revendication 1, dans lequel chacun des premier et deuxième mécanismes de montage de plaque (8. 9) comprend une plaque de réglage de transition transversale (17) ajustée de manière réglable à la poutre supérieure (1), dans lequel la plaque de réglage de transition transversale (17) peut se déplacer longitudinalement le long de la poutre supérieure (1), et comprend en outre un premier mécanisme de fixation (30) servant à fixer la plaque de réglage de transition transversale (17) à une position longitudinale souhaitée le long de la poutre supérieure (1).

3. Appareil à poutre amovible de retournement servant à retourner un moule de pale d'éolienne selon la revendication 2, dans lequel chacun des premier et deuxième mécanismes de montage de plaque (8, 9) comprend en outre une plaque de fixation de transition transversale (14) qui est fixée à la poutre supérieure (1) dans une position fixe, et chaque plaque de réglage de transition transversale (17) est fixée de manière réglable à la plaque de fixation de transition transversale respective (14) par le premier mécanisme de fixation respectif (30).

4. Appareil à poutre amovible de retournement servant à retourner un moule de pale d'éolienne selon la revendication 3, dans lequel le premier mécanisme de fixation (30) comprend une pluralité de boulons, et éventuellement dans lequel les boulons passent à travers des trous de réglage allongés transversalement dans la plaque de réglage de transition transversale (17) et à travers des trous de boulon de fixation dans la plaque de fixation de transition transversale (14), de sorte que la plaque de réglage de transition transversale (17) peut se déplacer transversalement par rapport à la plaque de fixation de transition transversale (14), et/ou les boulons passent à travers des trous de réglage allongés longitudinalement dans la plaque de réglage de transition transversale (17) et à travers des trous de boulon de fixation dans la plaque de fixation de transition transversale (14), de sorte que la plaque de réglage de transition transversale (17) peut se déplacer longitudinalement par rapport à la plaque de fixation de transition transversale (14), et en outre éventuellement dans lequel le premier mécanisme de réglage (32) comprend un premier boulon de réglage (130) ajusté par filetage à un premier couplage fileté (13) qui est dans une position fixe par rapport à la poutre supérieure (1), et le premier boulon de réglage (130) entre en contact de manière mobile avec la plaque de réglage de transition transversale (17).

5. Appareil à poutre amovible de retournement servant à retourner un moule de pale d'éolienne selon la revendication 3, dans lequel chacun des premier et deuxième mécanismes de montage de plaque (8, 9) comprend un premier mécanisme de réglage (32) ajusté entre la plaque de réglage de transition transversale (17) et la plaque de fixation de transition transversale (14) ou une partie de la poutre supérieure (1) adjacente à celle-ci, le premier mécanisme de réglage (32) étant agencé de manière à régler la position de la plaque de réglage de transition transversale (17) par rapport à la plaque de fixation de transition transversale (14) dans une direction s'étendant longitudinalement le long de la poutre supérieure (1).

6. Appareil à poutre amovible de retournement servant à retourner un moule de pale d'éolienne selon la revendication 2, dans lequel chaque plaque de réglage de transition transversale (17) comprend une paire de tourillons (40), les tourillons (40) s'étendant dans des directions opposées transversalement à partir de la poutre supérieure (1), et chacun des premier et deuxième mécanismes de montage de plaque (8, 9) comprend en outre une paire de plaques de réglage de transition longitudinale (16), chaque plaque de réglage de transition longitudinale (16) étant montée de manière rotative sur un tourillon respectif (40), dans lequel chaque plaque de réglage de transition longitudinale (16) comprend une cavité (41) dans laquelle le tourillon respectif (40) est reçu, chaque plaque de réglage de transition longitudinale (16) étant dotée d'une plaque d'ajustement respective (15) ajustée à celle-ci.

7. Appareil à poutre amovible de retournement servant à retourner un moule de pale d'éolienne selon la revendication 6, comprenant en outre un deuxième mécanisme de réglage (42) ajusté à chaque plaque de réglage de transition longitudinale respective (16), le deuxième mécanisme de réglage (42) étant positionné entre la plaque de réglage de transition longitudinale (16) et la poutre supérieure (1), le deuxième mécanisme de réglage (42) étant agencé de manière à régler transversalement la plaque de réglage de transition longitudinale (16) dans une direction orthogonale à la poutre supérieure (1), et éventuellement dans lequel le deuxième mécanisme de réglage (42) comprend un deuxième boulon de réglage (45) ajusté par filetage à un deuxième couplage fileté (46) qui est dans une position fixe par rapport à la poutre supérieure (1) ou par rapport à la plaque de réglage de transition transversale (17), et le deuxième boulon de réglage (45) entre en contact de manière mobile avec la plaque de réglage de transition longitudinale (16).

8. Appareil à poutre amovible de retournement servant à retourner un moule de pale d'éolienne selon la revendication 6, comprenant en outre un deuxième mécanisme de fixation (60) ajusté à chaque plaque de réglage de transition longitudinale respective (16), le deuxième mécanisme de fixation (60) étant agencé de manière à fixer la plaque de réglage de transition longitudinale (16) dans une position transversale souhaitée qui est orthogonale à la poutre supérieure (1), et éventuellement (i) dans lequel chaque plaque de réglage de transition longitudinale (16) comprend une paire d'éléments de plaque (75) ajustés autour de côtés opposés respectifs du tourillon respectif (40), et le deuxième mécanisme de fixation (60) comprend une pluralité de boulons (62) s'étendant à travers la paire d'éléments de plaque (75) afin de serrer la paire d'éléments de plaque (75) dans une position fixe par rapport au tourillon respectif (40), et en outre éventuellement (ii) dans lequel la plaque d'ajustement (15) est prise en sandwich entre la paire d'éléments de plaque (75).

9. Appareil à poutre amovible de retournement servant à retourner un moule de pale d'éolienne selon la revendication 6, comprenant en outre un troisième mécanisme de réglage (52) ajusté à chaque plaque de réglage de transition longitudinale respective (16), le troisième mécanisme de réglage (52) étant positionné entre la plaque d'ajustement (15) et la plaque de réglage de transition longitudinale (16), le troisième mécanisme de réglage (52) étant agencé de manière à régler verticalement la plaque d'ajustement (15) par rapport à la plaque de réglage de transition longitudinale (16), et éventuellement dans lequel le troisième mécanisme de réglage (52) comprend un troisième boulon de réglage (55) ajusté par filetage à un troisième couplage fileté (56) qui est dans une position fixe par rapport à la plaque d'ajustement (15), et le troisième boulon de réglage (55) entre en contact de manière mobile avec la plaque de réglage de transition longitudinale (16).

10. Appareil à poutre amovible de retournement servant à retourner un moule de pale d'éolienne selon la revendication 6, comprenant en outre un troisième mécanisme de fixation (70) ajusté à chaque plaque de réglage de transition longitudinale respective (16), le troisième mécanisme de fixation (70) étant agencé de manière à fixer la plaque d'ajustement (15) à une hauteur souhaitée par rapport à la plaque de réglage de transition longitudinale respective (16).

11. Appareil à poutre amovible de retournement servant à retourner un moule de pale d'éolienne selon la revendication 1, dans lequel le premier mécanisme de liaison de bras de retournement (10) comprend une pluralité de plaques parallèles orientées verticalement (90) qui s'étendent dans une direction parallèle à la poutre supérieure (1), les plaques parallèles orientées verticalement (90) étant espacées les unes des autres, dans lequel les plaques parallèles orientées verticalement (90) sont reliées de manière amovible à une extrémité supérieure (92) du bras de retournement (3), et éventuellement dans lequel les plaques parallèles orientées verticalement (90) comprennent des trous traversants étendus verticalement (93), une pluralité de boulons (94) passent à travers les trous traversants (93) afin de relier de manière amovible la poutre supérieure (1) à l'extrémité supérieure (92) du bras de retournement (3), et la hauteur de la poutre supérieure (1) peut être réglée en réglant les positions des trous traversants (93) par rapport aux boulons (94).

12. Appareil à poutre amovible de retournement servant à retourner un moule de pale d'éolienne selon la revendication 1, dans lequel le deuxième mécanisme de liaison de bras de retournement (23) comprend une plaque verticale (84) s'étendant le long d'une direction transversale par rapport à la poutre inférieure (2), et une plaque de base (85) s'étendant à partir d'une portion inférieure de la plaque verticale (84) dans une direction parallèle à la direction longitudinale de la poutre inférieure (2), dans lequel le bras de retournement (3) est monté à côté de la plaque verticale (84) et sur la plaque de base (85).

13. Appareil à poutre amovible de retournement servant à retourner un moule de pale d'éolienne selon la revendication 1, dans lequel le support inférieur (22) comprend une paire de plaques d'appui inférieures (122a, 122b), chaque plaque d'appui inférieure (122a, 122b) étant installée sous l'une respective de la première extrémité libre (26) et de la deuxième extrémité opposée (27) de la poutre inférieure (2), et éventuellement dans lequel la poutre inférieure (2) comprend en outre un dispositif de réglage de niveau (24), dans lequel le dispositif de réglage de niveau (24) est ajusté entre la première extrémité libre (26) de la poutre inférieure (2) et la plaque d'appui inférieure respective (122a) située en dessous, et la deuxième extrémité opposée (27) est ajustée à la plaque d'appui inférieure respective (122b) située en dessous au moyen d'un mécanisme de charnière (88) ayant un axe de charnière horizontal, et en outre éventuellement dans lequel le dispositif de réglage de niveau (24) comprend un mécanisme de lien (47), le mécanisme de lien (47) disposant d'une première extrémité (48) ajustée de manière articulée à la plaque d'appui inférieure respective (122a) et d'une deuxième extrémité (49) ajustée de manière articulée à une plaque de support (59) qui est ajustée de manière réglable à la première extrémité libre (26).

14. Appareil à poutre amovible de retournement servant à retourner un moule de pale d'éolienne selon la revendication 1, (i) dans lequel la poutre supérieure (1) est une poutre en caisson soudée ; ou (ii) dans lequel le support inférieur (22) est fixé au sol par des boulons d'expansion ou des boulons d'ancrage chimique ; ou (iii) dans lequel le bras de retournement (3) est relié à un cylindre d'huile hydraulique et à une unité de commande électronique de celui-ci ; ou (iv) dans lequel chaque plaque d'ajustement (15) comprend deux éléments de plaque orthogonaux (100, 102), définissant entre eux une surface de coin intérieure allongée s'étendant vers le haut (104) à des fins de montage sur un longeron allongé (106) d'une structure de cadre (38) d'un moule supérieur (5).

15. Appareil à poutre amovible de retournement servant à retourner un moule de pale d'éolienne selon la revendication 1, (A) en combinaison avec un moule supérieur (5) d'un moule de pale d'éolienne, le moule supérieur ayant une structure de cadre (38) servant à supporter une surface de moulage supérieure, dans lequel les plaques d'ajustement (15) sont fixées à la structure de cadre (38) du moule supérieur (5) au moyen de vis filetées ; ou (B) en combinaison avec un moule inférieur (4) d'un moule de pale d'éolienne, le moule inférieur (4) ayant une structure de cadre (39) servant à supporter une surface de moulage inférieure, dans lequel la poutre inférieure (2) passe à travers la structure de cadre (39) du moule inférieur (5) et n'est pas en contact avec le moule inférieur (5).
